# EUROPEAN PATENT SPECIFICATION

(11) **EP 0 666 304 B1**
(45) Date of publication and mention of the grant of the patent: **08.11.2000**
(21) Application number: 94870020.8
(22) Date of filing: 03.02.1994
(51) Int. Cl.: C11D 3/20, C11D 1/62, C11D 1/90, C11D 1/92, C11D 1/94, C23G 1/02, C23G 1/08, C02F 5/10, C02F 5/12

(54) **Acidic cleaning compositions**
Saure Reinigungszusammensetzungen
Compositions de nettoyage acides

(43) Date of publication of application: 09.08.1995
(73) Proprietor: THE PROCTER & GAMBLE COMPANY, Cincinnati, Ohio 45202 (US)
(72) Inventor: Carrié, Michel Jean, B-1780 Wemmel (BE); Vos, Eddy, B-3210 Linden (BE)
(74) Representative: Engisch, Gautier

(56) References cited:
- EP-A- 0 228 501
- EP-A- 0 336 878
- EP-A- 0 411 708
- EP-A- 0 601 990
- GB-A- 2 106 927
- US-A- 5 061 393

## Description

### Technical field

The present invention relates to cleaning compositions for hard-surfaces. More specifically, compositions are described which comprise surfactants which are substantially odor-free. Indeed, said compositions give optimal performance in removing limescale stains and encrustations while being odor-free and are particularly adapted for descaling appliances.

### Background

It is well known in the art that limescale deposits can be chemically removed with acidic solutions, and a great variety of acidic cleaning compositions have been described for this purpose.

Furthermore, it is known in the art to use surfactants in such acidic compositions to lower the surface tension and to improve the wettability of the surfaces being cleaned. The presence of surfactants in such compositions helps to solubilize the soils and to improve the streaking profile of the acids, thereby also slowing down the limescale redeposition phenomenon.

However, the presence of surfactants causes the problem that a base odor is imparted to the compositions comprising them, thereby making them not attractive from a consumer point of view. This base odor, chemical in nature, can be due to the surfactant molecules themselves, to the presence of unreacted intermediates from the surfactant making process or to other impurities within the surfactant raw materials.

To overcome this problem it is well known in the art to add a perfume in surfactant-based compositions, one of its role being to effectively mask the surfactants base odor. However, it has been found that perfumes tend to deposit onto synthetic materials and are thus difficult to rinse off.

This is even more of a problem in applications such as the descaling of appliances including cooking appliances (e.g. coffee machine), beauty care appliances (e.g. dental jet machine) or any other appliance such as steam irons, kettles and the like, as said appliances comprise various synthetic surfaces. Indeed, during the descaling operation of such an appliance perfumes firstly tend to deposit onto the synthetic surfaces and then tend to be released during the normal use of said appliance. In other words, food or beverage can be contaminated during the normal use of a cooking appliance, when said normal use follows the descaling operation of said appliance with a composition comprising perfumes. This is highly undesirable from a consumer acceptance viewpoint. Thus it is desirable to use descaling compositions being free of perfumes.

It is therefore an object of the present invention to provide a composition comprising surfactants and an organic acid, for the removal of limescale deposits, said composition being free of perfume and possessing a superior limescale removing capacity while being also substantially odor-free.

It has now been found that compositions comprising an organic acid being substantially odor-free such as maleic acid together with a cationic surfactant are substantially odor-free without the need of adding any further compound such as a perfume to mask the surfactants base odor. Indeed, we have found that a cationic surfactant does not impart a base odor to a composition, or to the surfaces treated with said composition, provided that the pH of the composition is neutral or maintained in the acidic range. Unexpectedly the compositions of the present invention comprising maleic acid and such a surfactant or mixtures thereof under neutral or acidic conditions, are substantially odor-free compared to the same compositions with equivalent amount of other surfactant types such as anionic, nonionic, amine oxide surfactants or mixtures thereof.

An advantage of the present invention is that said compositions are particularly suitable for applications in which the presence of perfume is not desirable including the descaling of appliances such as cooking appliances, beauty care appliances or any other appliance such as steam irons, kettles, coffee machines, tea pots and the like.

A further advantage is that the compositions of the present invention are also safe to a wide variety of materials used to manufacture said appliances, including synthetic materials as well as any type of metal (e.g. aluminum, stainless steel, chromed steel and the like).

European patent EP-A-0 601 990 discloses an acidic composition comprising an acid for example maleic acid together with a thickening system comprising from 0.5% to 15% by weight of the total composition of a mixture of a nonionic surfactant and a cationic surfactant. No reference is made to the possibility to provide substantially odor-free surfactants based compositions due to the use of said cationic surfactants as the surfactant.

GB 2071 688 and EP 255 978 disclose acidic compositions comprising among other ingredients from 0.1% to 10% by weight of cationic surfactants and a strong inorganic acid. Organic acids and in particular maleic acid are not disclosed. No reference is made to the possibility to provide substantially odor-free surfactants based compositions due to the use of said cationic surfactants as the surfactant.

EP 336 878 relates to acidic aqueous cleaners having a pH from 1 to 4 comprising synthetic organic detergents and a lime scale/soap scum removing proportion of dicarboxylic acid.

### Summary of the invention

The present invention is an aqueous composition having a pH of from 0.1 to 7 comprising an organic acid, a surfactant and is free of any perfume and nonionic surfactants. Said surfactant is a cationic surfactant.

The present invention also encompasses a process of descaling appliances wherein said acidic composition comprising a cationic surfactant, is applied in its neat form or in its diluted form to said appliances, then left to act and then removed by rinsing.

### Detailed description of the invention

The compositions according to the present invention are designed for removing limescale deposits. Thus they comprise as a first essential ingredient maleic acid. Said organic acid is also per se substantially odor-free. The compositions according to the present invention comprise from 0.1% to 45% by weight of the total composition of maleic acid, preferably from 1% to 25% and more preferably from 8% to 20%. This percentage is calculated on the basis of the molecular weight of the acid form, but maleic anhydride is equally convenient for use in the compositions according to the present invention. Indeed maleic anhydride is generally cheaper and it is transformed into the acid form when incorporated in an aqueous medium. In a preferred embodiment of the present invention maleic acid is used alone. However, other acids which are particularly efficient in removing limescale deposits may be used in addition to said organic acid, at levels at which they do not impart a base odor to the compositions. Such optional acids are for example sulfonic acids such as sulfamic acid or methanesulfonic acid, hydrochloric acid, citric acid, phosphoric acid or mixtures thereof. In another embodiment of the present invention maleic acid is used together with sulfonic acids such as sulfamic acid or methanesulfonic acid or/and citric acid.

The compositions according to the present invention comprise as a second essential ingredient a cationic surfactant or a mixture thereof. The compositions according to the present invention may comprise from 0.01% to 10% of said surfactant, preferably from 0.01% to 5%, more preferably from 0.01% to 2%. In a preferred embodiment of the present invention where the compositions are used to descale appliances the surfactant is present at a level below 1% by weight of the total composition, preferably from 0.01% to 0.9% and more preferably from 0.05% to 0.8%. It is possible to use mixtures of a type of surfactant or of different types of surfactants hereinafter described.

Suitable cationic surfactants to be used herein are according to the formula R₁R₂R₃R₄N⁺ X⁻, wherein X is a counteranion, R₁ is a C₈-C₂₀ hydrocarbon chain and R₂, R₃ and R₄ are independently selected from H or C₁-C₄ hydrocarbon chains. In a preferred embodiment of the present invention, R₁ is a C₁₂-C₁₈ hydrocarbon chain, most preferably C₁₄, C₁₆ or C₁₈, and R₂, R₃ and R₄ are all three methyl, and X is halogen, preferably bromide or chloride, most preferably bromide. Examples of cationic surfactants are stearyl trimethyl ammonium bromide (STAB), cetyl trimethyl ammonium bromide (CTAB) and myristyl trimethyl ammonium bromide (MTAB).

The third essential feature of the compositions of the present invention is their pH. The compositions according to the present invention have a pH of from 0.1 to 7. Indeed, it has been found that the surfactants as defined in the present invention are substantially odor-free under neutral and acidic conditions whereas the same compounds impart a base odor to a composition comprising them under alkaline conditions. However, the limescale removing capacity of a composition according to the present invention is strongly dependent on its pH, and the lower the pH, the better the limescale removing capacity. Thus, the compositions according to the present invention preferably have a pH as is in the range of from 0.1 to 5, more preferably of from 0.1 to 3 and most preferably of from 0.5 to 2.

It has been observed that compositions according to the present invention having a pH of from 0.1 to 7 comprising maleic acid together with a surfactant consisting of a cationic surfactant or a mixture thereof, are substantially odor free compared to similar compositions comprising equivalent amount of other surfactant types such as anionic, nonionic surfactants, amine oxide surfactants or mixtures thereof. Indeed, the use of the cationic surfactants or mixtures thereof according to the present invention in hard-surfaces limescale removing compositions comprising maleic acid and no perfume improves the base odor of said compositions.

By "improving the base odor" it is to be understood that the smell due to the presence of surfactants in a composition having a pH of from 0.1 to 7 is reduced when the surfactant used in said composition is a cationic surfactant or mixtures thereof as defined in the present invention. A method suitable for measuring "the base odor improvement", i.e. the smell reduction phenomenon, is an olfactory grading method mentioned hereinafter in the examples. In said method professional perfumers give a description of the odor (e.g. amine, fatty) as well as an evaluation of the odor impact (e.g. weak or strong).

Furthermore, it has now been found that acidic compositions comprising maleic acid together with a surfactant consisting of the surfactant hereinbefore described, at a level below 1% by weight of the total composition, are particularly suitable for descaling applications where good wetting and low sudsing properties are essential but in which the presence of a surfactant base odor or the presence of perfumes to mask said odor is not desirable from a consumer acceptance. A typical such application is the descaling of cooking appliances such as coffee machines, of beauty care appliances or even of any appliance where the presence of perfumes and/or any base odor is not desirable (steam irons, kettles, and the like).

The compositions according to the present invention are aqueous. Accordingly, the compositions according to the present invention may comprise from 10% to 95% by weight of the total composition of water, preferably from 50% to 90%, most preferably from 70% to 85%.

The compositions according to the present invention may further comprise a variety of other ingredients including colorants, bactericide, thickeners, dyes, chelants, pigments, solvents, stabilizers, and corrosion inhibitors.

The present invention also encompasses a process of descaling appliances wherein an acidic composition comprising a surfactant consisting of a cationic surfactant or mixtures thereof is applied in its neat form or in its diluted form to said appliances, then left to act and then removed by rinsing.

The expression "applied in diluted form" herein includes dilution by the user, which occurs for instance in the application of descaling appliances. Typical dilution levels are of from 0.5% to 50% of the compositions.

The compositions herein are also particularly suitable to be used in hot conditions, e.g. when descaling a coffee machine said compositions can be used neat or diluted and in hot conditions (80°C to 180°C).

The present invention is further illustrated by the following experimental data and examples.

### Experimental data

### 1)

Compositions according to the present invention were evaluated in terms of their base odor with an olfactory grading test method.

For this purpose compositions according to the present invention have been prepared. These compositions are made comprising the listed ingredients in the listed proportions (weight %).

| Ingredients: (% by weight) | Compositions | | | |
|---|---|---|---|---|
| | 1 | 2 | 3 | 4 |
| Maleic acid | 6 | 6 | 6 | 14 |
| MTAB* | 3 | / | / | / |
| Cocoamido propyl hydroxysulfobetaine** | / | 3 | / | / |
| Amine oxide | / | / | 3 | / |
| Lutensol® AO 7*** | / | / | / | 0.5 |
| Waters & Minors | up to 100 | | | |

| | | | | |
|---|---|---|---|---|
| * MTAB is myristic trimethylammonium bromide (cationic surfactant). | | | | |
| ** Cocoamido propyl hydroxysulfobetaine is a zwitterionic surfactant. | | | | |
| *** Lutensol AO7 is a nonionic surfactant. | | | | |

The odor evaluation was conducted by a panel of two professional perfumers who evaluated compositions 1, 2, 3 and 4 at three different pH values (e.g. highly acidic, neutral and highly basic) placed in blind bottles. Each panelist smelled each of the three pH variations of the above compositions and gave a description of the odor per se in terms of fatty, amine, waxy or aldehyde odor as well as an evaluation of the odor impact itself.

### Odor test results:

| Comp. | 1 | 2 | 3 | 4 |
|---|---|---|---|---|
| pH = 1.5 | neutral | weak fatty | green waxy strong fatty | fatty |
| pH = 7 | neutral | weak fatty | waxy strong fatty | / |
| pH = 12 | strong amine | strong fatty | aldehyde weak fatty | / |

The results show that composition 1 based on a cationic surfactant has a strong amine odor under alkaline conditions whereas under neutral and acidic conditions said composition 1 smells neutral, i.e. is substantially odor-free. The results also show that composition 2 based on a zwitterionic surfactant has a strong fatty odor under alkaline conditions whereas under neutral and acidic conditions said composition 2 has an improved base odor (weak fatty odor). Furthermore, in contrast to compositions 1 and 2 which show an improved base odor under neutral and acidic pH conditions, composition 3 which includes amine oxide as a surfactant does not display a better base odor in acid medium compared to alkaline conditions. The results also show that composition 4 which includes a nonionic surfactant does smell (fatty odor) under acidic conditions (pH=1.5) compared to compositions 1 and 2 which are substantially odor free at the same pH.

Thus, according to the present invention compositions comprising maleic acid and as a surfactant a cationic surfactant are substantially base odor free under neutral and acidic conditions compared to the same compositions having other surfactant types as for example amine oxide or nonionic surfactants.

### 2)

Further examples of compositions according to the present invention are the following. These compositions are made comprising the listed ingredients in the listed proportions (weight %).

| Ingredients: (% by weight) | Compositions | | |
|---|---|---|---|
| | 1 | 2 | 3 |
| Maleic acid | 19 | 16 | 14 |
| Citric acid | / | 3 | 3 |
| Sulfamic acid | / | / | 2 |
| MTAB* | 0.2 | 0.2 | 0.2 |
| Waters & Minors | up to 100 | | |

| | | | |
|---|---|---|---|
| MTAB* is myristic trimethylammonium bromide (cationic surfactant). | | | |

All the compositions according to the examples above exhibit superior limescale performance while being substantially odor free.

## Claims

1. An aqueous composition having a pH of from 0.1 to 7 comprising from 0,1% to 45% of maleic acid and a surfactant, characterized in that said surfactant is a cationic surfactant of the formula R₁R₂R₃R₄N⁺ X⁻, wherein X is a counteranion, R₁ is a C₈-C₂₀ hydrocarbon chain and R₂, R₃ and R₄ are independently selected from H or C₁-C₄ hydrocarbon chains or mixtures thereof and in that said composition is perfume-free and free of nonionic surfactants.

2. A composition according to claim 1 wherein said composition is a limescale removing composition having a pH of from 0.1 to 5, preferably of from 0.1 to 3 and more preferably of from 0.5 to 2.

3. A composition according to any of the preceding claims comprising from 1% to 25% by weight of the total compositions of said acid, preferably from 8% to 20%.

4. A composition according to any of the preceding claims comprising from 0.01% to 10% by weight of the total compositions of said surf actant, preferably from 0.01% to 5% and more preferably from 0.01% to 2%.

5. A composition according to any of the preceding claims wherein in said cationic surfactant X is bromide or chloride, R₁ is a C₁₂-C₁₈ hydrocarbon chain, most preferably C₁₄, C₁₆ or C₁₈ and R₂, R₃ and R₄ are all three methyl.

6. A composition according to any of the preceding claims wherein said composition further comprises sulfamic acid, methanesulfonic acid, citric acid, phosphoric acid, hydrochloric acid or mixtures thereof.

7. A process of descaling appliances wherein an acidic composition according to any of the preceding claims is applied in its neat form or in its diluted form to said appliances, then left to act and then removed by rinsing.

## Patentansprüche

1. Wäßrige Zusammensetzung mit einem pH von 0,1 bis 7, umfassend 0,1 bis 45% Maleinsäure und ein Tensid, dadurch gekennzeichnet, daß das Tensid ein kationisches Tensid der Formel R₁R₂R₃R₄N⁺ X⁻ ist, worin X ein Gegenanion ist, R₁ eine C₈-C₂₀-Kohlenwasserstoffkette ist, und R₂, R₃ und R₄ unabhängig aus H oder C₁-C₄-Kohlenwasserstoffketten oder Mischungen hiervon gewählt sind, und daß die Zusammensetzung parfümfrei und frei an nichtionischen Tensiden ist.

2. Zusammensetzung nach Anspruch 1, wobei die Zusammensetzung eine Kalkbelag entfernende Zusammensetzung mit einem pH von 0,1 bis 5, vorzugsweise 0,1 bis 3, und weiter vorzugsweise 0,5 bis 2, ist.

3. Zusammensetzung nach mindestens einem der vorangehenden Ansprüche, umfassend 1 bis 25 Gew.-% der gesamten Zusammensetzung an der Säure, vorzugsweise 8 bis 20%.

4. Zusammensetzung nach mindestens einem der vorangehenden Ansprüche, umfassend 0,01 bis 10 Gew.-% der gesamten Zusammensetzung an dem Tensid, vorzugsweise 0,01 bis 5%, und weiter vorzugsweise 0,01 bis 2%.

5. Zusammensetzung nach mindestens einem der vorangehenden Ansprüche, wobei bei dem kationischen Tensid X Bromid oder Chlorid ist, R₁ eine C₁₂-C₁₈-Kohlenwasserstoffkette, am meisten bevorzugt C₁₄, C₁₆ oder C₁₈, ist, und R₂, R₃ und R₄ alle drei Methyl sind.

6. Zusammensetzung nach mindestens einem der vorangehenden Ansprüche, wobei die Zusammensetzung weiterhin Sulfaminsäure, Methansulfonsäure, Citronensäure, Phosphorsäure, Chlorwasserstoffsäure oder Mischungen hiervon umfaßt.

7. Verfahren zum Entkalken von Geräten, bei dem eine saure Zusammensetzung gemäß mindestens einem der vorangehenden Ansprüche in unverdünnter Form oder in verdünnter Form auf die Geräte aufgebracht, dann wirken gelassen und danach durch Spülen entfernt wird.

## Revendications

1. Composition aqueuse ayant un pH de 0,1 à 7 comprenant 0,1% à 45% d'acide maléique et un tensioactif, caractérisée en ce que ledit tensioactif est un tensioactif cationique de formule R₁R₂R₃R₄N⁺ X⁻, dans laquelle X est un contre-anion, R₁ est une chaîne hydrocarbonée en C₈ à C₂₀ et R₂, R₃ et R₄ sont choisis indépendamment parmi H ou des chaînes hydrocarbonées en C₁ à C₄ ou des mélanges de ceux-ci, et en ce que ladite composition est exempte de parfum et exempte de tensioactifs non ioniques.

2. Composition selon la revendication 1, dans laquelle ladite composition est une composition éliminant le tartre ayant un pH de 0,1 à 5, de préférence 0,1 à 3 et mieux encore 0,5 à 2.

3. Composition selon l'une quelconque des revendications précédentes comprenant 1% à 25% en poids des compositions totales dudit acide, de préférence 8% à 20%.

4. Composition selon l'une quelconque des revendications précédentes comprenant 0,01% à 10% en poids des compositions totales dudit tensioactif, de préférence 0,01% à 5% et mieux encore 0,01% à 2%.

5. Composition selon l'une quelconque des revendications précédentes dans laquelle dans ledit tensioactif cationique X est le bromure ou le chlorure, R₁ est une chaîne hydrocarbonée en C₁₂ à C₁₈, mieux encore en C₁₄, C₁₆ ou C₁₈, et R₂, R₃ et R₄ sont tous les trois un groupe méthyle.

6. Composition selon l'une quelconque des revendications précédentes dans laquelle ladite composition comprend, en outre, de l'acide sulfamique, de l'acide méthanesulfonique, de l'acide citrique, de l'acide phosphorique, de l'acide chlorhydrique ou des mélanges de ceux-ci.

7. Procédé de détartrage d'appareils dans lequel on applique une composition acide selon l'une quelconque des revendications précédentes sous sa forme pure ou sous sa forme diluée auxdits appareils, puis on la laisse agir et ensuite on l'élimine par rinçage.
